# FASCICULE DE BREVET EUROPEEN

(11) **EP 3 051 958 B1**
(45) Date de publication et mention de la délivrance du brevet: **08.11.2017**
(21) Numéro de dépôt: 14722286.3
(22) Date de dépôt: 17.04.2014
(51) Int. Cl.: A23K 10/30, A23K 40/10, A23K 40/20, A23K 50/10, A23K 50/30, A23K 50/75, C08B 30/02, C08B 30/04, C08B 30/10, C08H 8/00, C08L 97/02

(54) **COMPOSITION ALIMENTAIRE DE GRANULÉS POUR ALIMENTATION ANIMALE**
NAHRUNGSMITTELZUSAMMENSETZUNG IN GRANULATFORM FÜR TIERFUTTER
FOOD COMPOSITION IN GRANULE FORM FOR ANIMAL FEED

(30) Priorité: 30.04.2013 FR 1353964
(43) Date de publication de la demande: 10.08.2016
(73) Titulaire: ABRIEL, 97480 Saint-Joseph (FR)
(72) Inventeur: ABRIEL, Luc-Henriot, B-1547 Biévène (BE)
(74) Mandataire: Novagraaf Technologies
(86) Numéro de dépôt international: PCT/FR2014/050940
(87) Numéro de publication internationale: WO 2014/177789

(56) Documents cités:
- CN-A- 102 715 359
- CN-U- 202 081 043
- US-A- 2 557 032
- US-A- 3 519 431
- US-A- 4 716 218
- US-A1- 2008 233 244
- THITIPRAPHUNKUL K ET AL: "A comparative study of edible canna (Canna edulis) starch from different cultivars. Part I. Chemical composition and physicochemical properties", CARBOHYDRATE POLYMERS, APPLIED SCIENCE PUBLISHERS, LTD. BARKING, GB, vol. 53, no. 3, 15 août 2003 (2003-08-15), pages 317-324, XP004431235, ISSN: 0144-8617, DOI: 10.1016/S0144-8617(03)00081-X
- ARELLANO M L ET AL: "Estudio de la composicion qUlmica de 6 plantas no convencionales del Estado de Oaxaca, Mexico, como recursos potenciales en la alimentacion animal - [Chemical composition of 6 unconventional plants from Oaxaca State, Mexico, as potential resources for animal feed]", ARCHIVOS LATINOAMERICANOS DE NUTRICION (ALAN), SOCIEDAD LATINOAMERICANA DE NUTRICION, VE, vol. 43, no. 3, 1 septembre 1993 (1993-09-01), pages 264-268, XP008166586, ISSN: 0004-0622
- SINGH K C ET AL: "NUTRITIVE VALUE OF CANNA AS A FEED FOR LIVESTOCK", MYSORE JOURNAL OF AGRICULTURAL SCIENCES, COMPTROLLER, UNIVERSITY OF AGRICULTURAL SCIENCES, BANGALORE, IN, vol. 20, no. 3, 1 janvier 1986 (1986-01-01), pages 208-211, XP008166585, ISSN: 0047-8539
- HAJOON JUN ET AL: "Feeding Value and In situ Digestibility of Edible Canna for Silage", PLANT PRODUCTION SCIENCE, vol. 9, no. 4, 1 janvier 2006 (2006-01-01) , pages 408-414, XP055095555, ISSN: 1343-943X, DOI: 10.1626/pps.9.408

## Description

### Domaine de l'invention

L'invention se rapporte à une composition alimentaire de granulés solides pour alimentation animale. Elle concerne également le procédé correspondant de préparation de ces granulés.

La présente invention concerne le domaine agricole et agro-alimentaire, notamment des compositions alimentaires à base de matières premières végétales.

### Etat de l'art

Diverses compositions alimentaires à base de matières premières végétales telles que par exemple, le maïs, le soja, la luzerne, etc. sont décrites dans l'art antérieur.

Cependant, le problème que posent les granulés à base de matières premières végétales telles que le maïs, le soja ou la luzerne est que la culture de ces plantes n'est pas adaptée à la gestion des ressources alimentaires en agriculture durable. En effet, la culture de ces plantes nécessite une utilisation abondante d'intrants tels que les engrais ou les pesticides.

En outre, la raréfaction des matières premières usuellement utilisées dans l'alimentation animale du fait de leur utilisation dans d'autres applications telles que la production de biocarburants ou bien du fait de conditions climatiques difficiles tels que des accidents météorologiques, engendre une augmentation du prix des céréales, renchérit les coûts de fabrication des intrants et par conséquent, contribue à l'augmentation du prix de fabrication des granulés [1], [2], [3].

L'utilisation d'un mélange de plantes comprenant une faible part de conflore dans un additif alimentaire pour oiseaux est par ailleurs connue du document CN102715359.

Ainsi, il existe un réel besoin de mise au point de granulés pour alimentation animale palliant ces défauts, inconvénients et obstacles de l'art antérieur, en particulier d'un procédé respectueux de l'environnement et qui permette de réduire les coûts de fabrication de ces granulés.

### Description de l'invention

L'invention a notamment pour objectif de pallier tout ou partie des inconvénients de l'art antérieur.

Plus précisément, un objectif de l'invention est de fournir une composition alimentaire de granulés solides pour alimentation animale, qui réponde aux besoins précités.

Un autre objectif de l'invention est de fournir un procédé de préparation des granulés solides selon l'invention.

Un autre objectif de l'invention est de proposer une solution qui s'inscrit dans le développement durable et soit adaptée à des accidents météorologiques tels que des intempéries.

Ces objectifs sont atteints grâce à l'utilisation de broyat de conflore ou edulis (canna indica ou balisier). Le conflore est une plante herbacée monocotylédone pérenne, cultivée dans la majeure partie de l'Amérique latine, ainsi que dans certaines parties d'Afrique, d'Australie et du Pacifique Sud. Elle peut tolérer les basses températures, la sècheresse et elle est relativement résistante aux maladies et aux insectes ravageurs des cultures. La plante peut atteindre jusqu'à 3 mètres de haut, elle se compose de fleurs, de feuilles, et d'un rhizome. Les rendements de culture se situent entre 15 et 50 tonnes de rhizomes par hectare, donnant entre 1,5 et 5 tonnes d'amidon extrait par hectare et par an.

Le terme « rhizome » tel qu'utilisé ici, se rapporte aux tiges souterraines et horizontales du conflore cachées entièrement ou en partie sous la terre. Ces rhizomes mesurent jusqu'à 60 cm de long, mais la plupart ont une longueur moyenne de 10 à 15 cm pour un diamètre compris entre 5 et 10 cm. Ils contiennent 25 à 30% d'hydrates de carbone, principalement de l'amidon et certaines variétés contiennent des quantités significatives de sucres simples. De plus, le rhizome de conflore est une matière végétale très fibreuse et de forte densité.

Ainsi, une composition alimentaire selon l'invention peut être sous forme de granulés solides pour alimentation animale comprenant :
- un broyat de conflore (*canna indica*),
- éventuellement un broyat d'une autre plante utilisée dans l'alimentation humaine ou animale, et
- éventuellement au moins un complément alimentaire.

Avantageusement, le broyat de conflore peut être un broyat de feuilles de conflore et/ou un broyat de rhizomes de conflore.

Avantageusement, le conflore peut être utilisé seul ou éventuellement avec un broyat d'une autre plante utilisée dans l'alimentation humaine ou animale. Avantageusement, ladite autre plante utilisée peut être choisie dans le groupe comprenant le maïs, le soja, la luzerne ou un mélange de ceux-ci.

Avantageusement, ledit complément alimentaire peut être composé d'au moins un des composés choisi dans le groupe comprenant un agent salant ou un prémixe qui peut être composé d'un ou des composés choisi (s) dans le groupe comprenant des vitamines, des minéraux, des oligo-éléments, des protéines, des produits médicamenteux, du piquant rouge, du piquant blanc, du trèfle fourragé, de la patate douce, du manioc, du pois, de la cacahuète, de la songe, de la canne fourragère, du fruit à pains ou d'un mélange de ceux-ci.

Avantageusement, le conflore peut être utilisé seul ou éventuellement avec au moins un complément alimentaire composé d'au moins un agent salant de préférence un sel couramment utilisé dans l'alimentation animale, par exemple, il peut s'agir de chlorure de sodium (NaCl), de chlorure de potassium ou de chlorure d'ammonium, de préférence le chlorure de sodium, ou un prémixe qui peut être composé d'au moins un composé choisi dans le groupe comprenant des vitamines, des minéraux, des oligo-éléments, des protéines, des produits médicamenteux, du piquant rouge, du piquant blanc, du trèfle fourragé, de la patate douce, du manioc, du pois, de la cacahuète, de la songe, de la canne fourragère, du fruit à pains ou d'un mélange de ceux-ci.

Avantageusement, la composition peut contenir de 50 à 100% en poids de broyat de conflore, de préférence 65 à 75% en poids de broyat de conflore, et tout préférentiellement 70% en poids de broyat de conflore; de 0 à 20% en poids d'une autre plante utilisée dans l'alimentation humaine ou animale, de préférence 13 à 20% en poids de soja, et tout préférentiellement 18% en poids de soja ; de 0 à 20% en poids de prémixe, de préférence 5 à 20% en poids de prémixe, et tout préférentiellement 9% en poids de prémixe ; de 0 à 15% en poids de sel, de préférence 3 à 8% en poids de sel, et tout préférentiellement 3% en poids de sel, la somme des pourcentages en poids de broyat de conflore, de plante utilisée dans l'alimentation humaine ou animale, de prémixe et de sel étant de 100%.

Les pourcentages représentent un pourcentage en poids du poids total de la composition.

Avantageusement, la plante utilisée dans l'alimentation humaine ou animale peut être le soja.

Avantageusement, la composition peut contenir :
- entre 65% et 75% en poids de feuilles conflore ou de rhizomes de conflore,
- entre 13% et 20% en poids de soja,
- entre 5% et 20% en poids de prémixe et,
- entre 3% et 8% en poids de NaCl,

les pourcentages représentent un pourcentage en poids du poids total de la composition et la somme des pourcentages en poids de feuilles conflore ou de rhizomes de conflore, de soja, de prémixe et NaCl étant de 100%.

Selon un autre aspect, l'invention fournit également un procédé de préparation de granulés solides tels que décrits précédemment, dans toutes leurs variantes, comprenant les étapes:
a) de récolte de rhizomes et/ou des feuilles de conflore,
b) de lavage du produit obtenu à l'étape a),
c) de broyage du produit obtenu à l'étape b),
d) de presse du produit obtenu à l'étape c),
e) de séchage du produit obtenu à l'étape d),
f) de tamisage du produit obtenu à l'étape e),
g) de malaxage du produit obtenu à l'étape f),
h) et d'extrusion du produit obtenu à l'étape g) pour former des granulés.

Avantageusement, la récolte de rhizomes et/ou des feuilles de conflore selon l'étape a) peut se faire manuellement ou mécaniquement sur les rhizomes et/ou sur les feuilles matures. Les feuilles et les rhizomes peuvent être récoltées toute l'année, avantageusement, la récolte des feuilles de conflore peut être effectuée deux fois par an, et la récolte de rhizomes de conflore peut être effectuée une fois par an.

Avantageusement, le lavage du produit obtenu à l'étape a) peut comprendre une étape de rinçage dans une cuve d'eau, puis d'un lavage par injection d'eau suivi d'une injection d'air.

Avantageusement, le lavage du produit obtenu à l'étape a) peut se faire à l'aide d'un mélange aqueux comprenant un ou des additif(s). Par exemple, ces additifs peuvent être un alcool, une solution aqueuse d'hypochlorite de sodium et de chlorure de sodium telle que de l'eau de Javel, ou bien un ou des produit (s) naturels (c'est-à-dire qui ne sont pas issu (s) d'une synthèse chimique, qui peuvent être obtenus à partir d'une source naturelle) tel que du NaCl, du jus d'agrume par exemple du citron.

Avantageusement, après lavage, les fibres de feuilles de conflore et/ou les fibres de rhizomes de conflore peuvent être amenées à une dimension comprise entre 1 à 3 mm par broyage. Avantageusement, l'étape de broyage peut être réalisée selon une technique de broyage déchiquetage à une vitesse comprise entre à une vitesse de 50 à 150 km.h⁻¹, de préférence de 50 km.h-¹.

Avantageusement, après broyage, l'eau peut être ensuite éliminée par presse à une vitesse comprise entre 2,5 et 5 km.h⁻¹, de préférence 2,5 km.h⁻¹, puis par une opération de séchage. L'étape de séchage peut être réalisée selon une technique de séchage à chaud à une température de préférence entre 20°C et 45°C.

Avantageusement, l'ajout du ou des complément(s) alimentaire(s) peut être effectué pendant l'étape de malaxage g) et/ou pendant l'étape de presse d) et/ou peut précéder l'étape de presse d).

Avantageusement, l'étape de séchage peut être réalisée selon une technique de séchage à chaud.

Avantageusement, la chaleur nécessaire au séchage à chaud peut provenir de résistances électriques, de panneaux solaires ou de rayonnements solaires.

Avantageusement après séchage, le tamisage peut être réalisé à l'aide de toute technique de tamisage appropriée.

Avantageusement, le tamis utilisé est un tissu métallique en inox ou un tissu en fibres naturelles telles que des fibres en coton ou en lin, ou en fibres synthétiques telles que du nylon, du polyester, du polyamide, du polyéthylène ou du polypropylène.

Avantageusement, les ouvertures des mailles du tamis peuvent être comprises entre 10 et 150 microns, de préférence 150 microns. Cette étape permet d'avoir un produit plus homogène.

Avantageusement après tamisage, le malaxage peut être réalisé entre autre selon une technique de rotation, de brassage, à une vitesse comprise entre 2 et 10 km.h-1, de préférence 2,5 km.h-1.

Enfin, après malaxage, le mélange peut être soumis à granulation grâce à n'importe quel procédé classique.

Avantageusement, l'étape d'extrusion peut être réalisée à l'aide d'une presse permettant de former des granulés telle qu'une extrudeuse ou une presse à granuler.

Avantageusement, l'eau issue de l'étape de presse d) peut être récupérée pour une utilisation agricole telle que l'irrigation de terres ou une consommation humaine ou animale.

Avantageusement, l'eau issue de l'étape de presse peut être décantée puis subir une première filtration à l'aide d'un tapis à bandes, puis une seconde filtration à l'aide de toute technique de filtration appropriée. Par exemple, il peut s'agir de filtres à bandes ou de filtres à cartouches de marque Biome® (marque de commerce).

Avantageusement, l'étape de presse d) peut être précédée d'une étape d'extraction d'amidon

Avantageusement l'extraction d'amidon peut se faire à l'aide d'un dispositif pour extraction mécanique d'amidon issu de matières premières végétales très fibreuses et de fortes densités, telles que le conflore, sans altérer l'amidon, ledit dispositif comprenant:
- au moins une cuve munie d'un fond et de parois latérales;
- une entrée pour l'approvisionnement des matières premières sous forme de pulpe;
- au moins une première et une deuxième vis sans fin ayant une fonction de convoiement installées respectivement dans un premier et deuxième tube, ces derniers pouvant être fixés dans la cuve ;
- au moins une sortie des matières premières transformées ; et,
- un tamis pour tamiser la pulpe.

Avantageusement, l'entrée et une première sortie (de l'au moins une sortie) des matières premières transformées peuvent communiquer chacune avec une extrémité dudit premier tube, et en ce que la première vis sans fin peut présenter un diamètre externe sensiblement égale à celui du premier tube.

Avantageusement, le premier tube peut être monté au-dessus d'au moins la deuxième vis sans fin installée dans le deuxième tube, lequel peut être disposé au fond de la cuve.

Cette configuration permet de créer un effet de gravité pour favoriser le passage des granules d'amidon d'une vis sans fin à l'autre.

De manière avantageuse, le premier tube peut être ménagé sensiblement en diagonale dans la cuve pour accentuer l'effet de gravité entre les deux vis sans fin.

Avantageusement, le premier tube peut présenter une face inférieure sur laquelle peut être fixé le tamis qui peut être agencé pour que des granules d'amidon issus du tamisage de la pulpe puissent tomber par gravité sur le deuxième tube.

Avantageusement, le deuxième tube peut présenter une face supérieure pouvant comprendre des ouvertures.

Cette configuration peut permettre de faciliter le passage des granules d'amidon vers la deuxième vis sans fin.

Avantageusement, le deuxième tube peut être disposé sur au moins un support fixé dans la cuve.

Plus précisément, ledit support peut présenter une section en forme de V qui peut être agencée pour que les granules d'amidons soient dirigés vers la face supérieure du deuxième tube. Les granules d'amidon peuvent s'accumuler sur la face supérieure munie d'ouvertures peuvent être ainsi tous transférées vers la deuxième vis sans fin qui peuvent les convoyer à son tour à l'extérieur de la cuve.

Avantageusement, la deuxième vis sans fin peut présenter un diamètre externe sensiblement égal à celui du deuxième tube de sorte que les granules d'amidon tombant au fond du tube puissent être entrainés par le filet de la vis sans fin pour un convoiement.

Avantageusement, la cuve peut être remplie d'eau pour obtenir une extraction humide qui puisse permettre de dissoudre certains composés de la pulpe et favoriser l'extraction de l'amidon.

Avantageusement, le dispositif d'extraction peut comprendre une deuxième sortie (de l'au moins une sortie) des matières premières transformées communiquant avec une extrémité du deuxième tube, ce qui peut permettre la récolte des granules d'amidon ou son transfert vers un autre dispositif de traitement.

Avantageusement, le dispositif peut comporter au moins une troisième vis sans fin installée dans un troisième tube qui peut communiquer avec l'entrée. De la sorte la pulpe flottant dans l'eau puisse être acheminée aisément vers la première vis sans fin.

Avantageusement, le dispositif peut être constitué de matériau en inox pour une meilleure compatibilité alimentaire.

L'invention concerne également un procédé d'extraction d'amidon au moyen d'un dispositif d'extraction d'amidon comprenant les caractéristiques susmentionnées. Ce procédé est remarquable en ce qu'il comprend les étapes suivantes :
- approvisionnement du dispositif de matières premières comprenant de l'amidon et sous forme de pulpe via l'entrée ;
- premier convoiement dans lequel la matière première est convoyée par la première vis sans fin le long du premier tube ;
- tamisage de ladite pulpe par le frottement de la première vis sans fin sur le tamis pour obtenir des granules d'amidon lesquels tombent par gravité au fond de la cuve ;
- un deuxième convoiement dans lequel les granules d'amidon sont convoyés et extraits de la cuve.
   Selon une autre mise en oeuvre du procédé, celui-ci comprend une étape dans laquelle un troisième convoiement est prévu pour convoyer et acheminer les granules d'amidon vers un éventuel autre dispositif de traitement.

### Liste des figures

D'autres caractéristiques et avantages ressortiront de la description ci-après, fournie à titre indicatif et nullement limitatif, en référence aux dessins annexés, dans lesquels :
- La figure 1 est une vue en perspective d'un dispositif d'extraction mécanique d'amidon utilisable dans le cadre de la présente invention;
- La figure 2 est une vue en coupe selon l'axe A-A représentée sur la figure 1 ;
- La figure 3 est une autre vue en coupe selon l'axe B-B représentée sur la figure 1 ;
- La figure 4 est une vue de détails et de face de la première vis sans fin dans le premier tube;
- La figure 5 représente un autre mode de réalisation d'un dispositif utilisable dans le cadre de la présente invention.

### Description détaillée

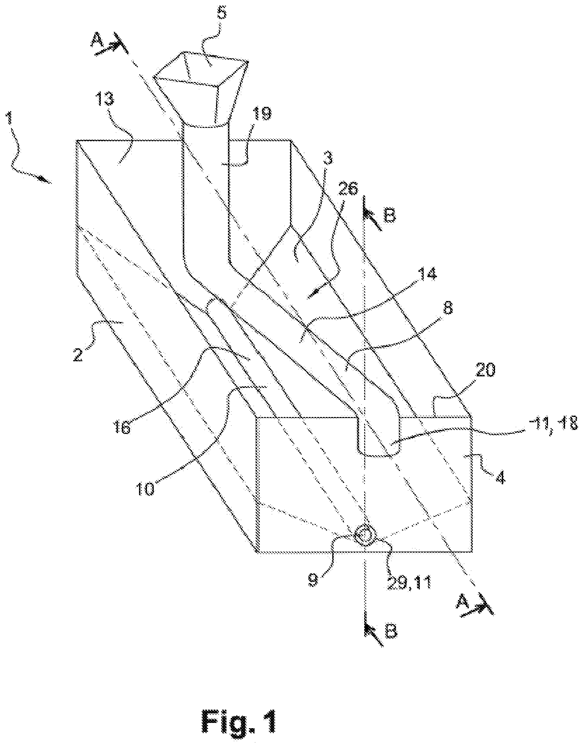

La figure 1 illustre un exemple de dispositif 1 pour l'extraction mécanique d'amidon de conflore selon l'invention. L'amidon extrait du dispositif est issu de matières végétales des plantes et notamment des tubercules et rhizomes tels que par exemple, manioc, topinambour, pomme de terre, canna, etc.

Le dispositif 1 pour l'extraction mécanique comprend :
- au moins une cuve 2 munie d'un fond 3 et de parois 4 latérales;
- une entrée 5 pour l'approvisionnement des matières premières 6 sous forme de pulpe (qui contient l'amidon);
- au moins une première 7 et une deuxième vis 9 sans fin ayant une fonction de convoiement installées respectivement dans un premier 8 et deuxième tube 10, ces derniers étant fixé dans la cuve 2 ;
- au moins une sortie 11 des matières premières 6 transformées ; et,
- un tamis 12 pour tamiser la pulpe.

On entend par le terme « tube » dans la présente description, un conduit de forme sensiblement cylindrique fermé ou un conduit de forme sensiblement cylindrique ouvert (auge).

La cuve 2 présente une section quadrangulaire ou autre. Elle est munie d'une ouverture 13 pour garantir l'accès aux différents éléments installés dans la cuve 1. Un couvercle (non représenté) est prévu pour refermer l'ouverture 13 et éviter que des corps étrangers pénètrent à l'intérieur de la cuve 2. La cuve 2 présente une longueur d'environ 10 m, une largeur d'environ 5 m, et une hauteur d'environ 2 m. Bien entendu, la cuve 2 peut présenter d'autres dimensions pour la réalisation de plus petits ou grands dispositif 1 pour l'extraction mécanique.

Avantageusement, la cuve 2 est remplie d'eau. La première 7 et la deuxième 9 vis sont immergées dans l'eau. L'extraction mécanique de l'amidon est donc obtenue par voie humide. Pendant l'extraction, la matière première se mélange harmonieusement dans l'eau ce qui favorise la dissolution et la séparation de certain nombre de constituants de la pulpe. La cuve 2 de part ses dimensions peut contenir un volume d'eau de l'ordre de 150 m3.

Le premier tube 8 est constitué d'une paroi 14 pourvue de deux extrémités 15, 15'. Le deuxième tube 10 comprend également une paroi 16 pourvue de deux extrémités 17, 17'.

Les première 7 et deuxième 9 vis sans fin comportent chacune un filet 22.

L'entrée 5 d'approvisionnement des matières premières 6 communique avec l'extrémité 15 et une première sortie 18 des matières premières 6 transformées communique avec l'extrémité 15' du premier tube 8. L'entrée 5 est couplée à un troisième tube 19 débouchant sur l'extrémité 15 du premier tube 8. Une troisième vis sans fin 30 est montée dans le troisième tube 19 pour favoriser l'approvisionnement de la pulpe vers la première vis 7.

La première sortie 18 est destinée à récupérer les fibres séparées de l'amidon qui une fois séchées peuvent être utilisées pour compléter la nourriture des animaux.

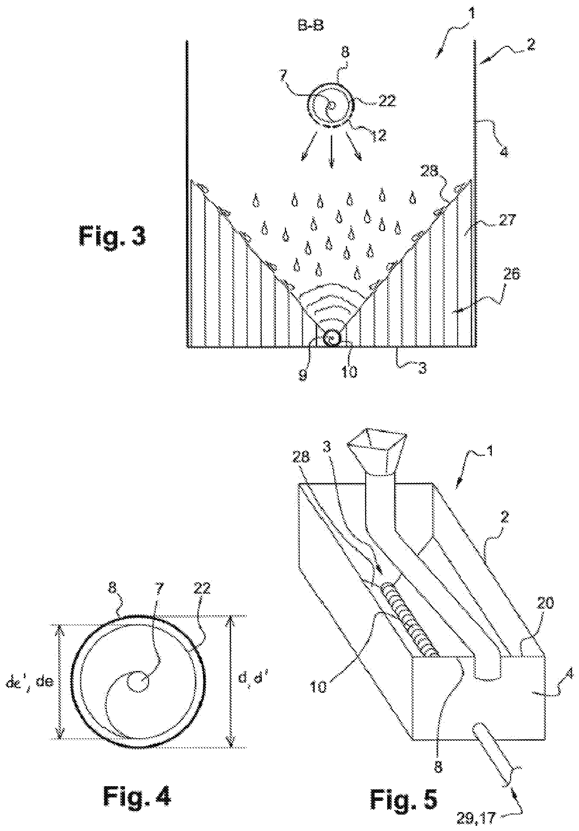

De manière plus précise (voir figure 4), la première vis 7 sans fin installée dans le premier tube 8 présente un diamètre externe de sensiblement égal au diamètre d du premier tube 8. La première vis 7 peut présenter une longueur d'environ 10 m, un diamètre externe de d'environ 20 cm. Le premier tube 8 comprend des dimensions sensiblement similaires à celles de la première vis 7.

Avantageusement, la deuxième vis 9 sans fin présente un diamètre externe de' sensiblement égal au diamètre d'du deuxième tube 10. Les dimensions du deuxième tube 10 et de la deuxième vis 9 peuvent être sensiblement égales à celles de la première vis 7 et du deuxième tube 8, tel que décrit précédemment.

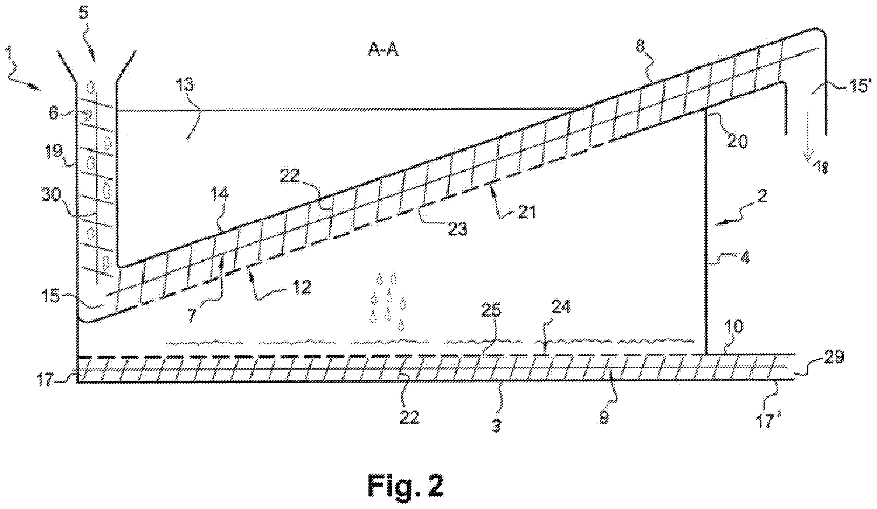

Comme on peut le voir sur la figure 2 qui représente une vue en coupe selon un axe A-A (on précise que l'axe A-A passe par un plan verticale longitudinale, suivant la longueur du premier tube par exemple), le premier tube 8 est monté au-dessus d'au moins la deuxième vis 9 sans fin installée dans le deuxième tube 10. Ce dernier est disposé au fond 3 de la cuve 2. Avantageusement, le premier tube 8 est ménagé sensiblement en diagonale dans la cuve 2, et toujours au-dessus du deuxième tube 10.

De préférence, le premier tube placé en diagonale est dans une direction sensiblement dirigée vers le haut. Dans ce cas de figure, l'extrémité 15 avoisine le fond 3 de la cuve 2 et la première sortie 18 repose par exemple sur un bord 20, en partie supérieure, d'une paroi latérale 4 de la cuve 2. Plus précisément encore, le premier tube 7 présente une face inférieure 21 sur laquelle est fixé le tamis 12 agencé pour que des granules d'amidon issus du tamisage de la pulpe tombent par gravité sur le deuxième tube 9. La face inférieure du premier tube 8 peut être découpée afin de recevoir le tamis 12. Celui-ci présente une longueur comprise entre 7 et 10 m, et une largeur comprise entre 5 et 15 cm, la longueur dépendant de celle du premier tube 8.

Le tamis 12 est constitué de mailles 23 ou orifice pouvant avoir un diamètre compris entre 100 µm et 250 µm. Du fait du diamètre externe de de la première vis 7 sans fin et du diamètre du premier tube 8 sensiblement égaux, le filet 22 de la première vis 7 permet le convoiement en même temps qu'un raclage ou frottement de la matière première 6 tel un pressoir, le long du tamis 12 pour entraîner un maximum d'amidon à travers les mailles 23 de celui-ci. Il en reste de cette opération de la fibre évacuée vers la première sortie 18 et les granules d'amidon tombant dans l'eau.

Le deuxième tube 10 présente une face supérieure 24 comprenant des ouvertures 25. Ces dernières permettent aux granules d'amidon de traverser la paroi 16 du deuxième tube 10 vers la deuxième vis 9 sans fin qui y est installée. Les ouvertures 25 peuvent être réalisées par perçage de la paroi 16 ou être prévues sur une feuille métallique (non représentée) qui sera posée sur la face supérieure 24 du deuxième tube 10.

Sur la figure 3 qui représente une vue en coupe selon l'axe B-B (on précise que l'axe B-B passe par un plan verticale suivant la largeur de la cuve, l'axe B-B étant perpendiculaire à l'axe A-A), on peut voir que le deuxième tube 10 est disposé sur au moins un support 26 fixé dans la cuve 2. Plus précisément, le ou les supports 26 présente(nt) une section en forme de V agencée pour que les granules d'amidons soient dirigés vers la face supérieure 24 du deuxième tube. De la sorte, tous les granules accumulés sont convoyés à l'extérieur de la cuve 2. Cela permet également, lors du nettoyage de la cuve une meilleure évacuation des eaux. Le ou les supports 26 peuvent être des panneaux 27 en forme d'équerre qui sont solidarisés de manière adjacente au fond 3 de la cuve par tout moyen de fixation. Un plateau 28 repose sur les panneaux 27 pour créer l'inclinaison de la cuve 2. D'autres moyens d'inclinaison sont bien sûr envisageables.

Une deuxième sortie 29 des matières premières 6 transformées, en l'occurrence, l'amidon sous forme de granules, communique avec l'extrémité 17' du deuxième tube 10. L'autre extrémité 17 du deuxième tube 10 est accolée à une paroi 4 latérale de la cuve 2. La deuxième sortie 29 se trouve à l'extérieur de la cuve 2 pour permettre la collecte des granules d'amidon. En particulier, le deuxième tube 10 et la deuxième vis 9 sans fin se prolongent à l'extérieur de la cuve 2. Cette installation permet de transférer les granules d'amidon de la cuve 2 vers une éventuelle autre unité ou dispositif de traitement qui permettra par exemple le séchage et/ou le conditionnement de l'amidon.

Dans un autre mode de réalisation illustré sur la figure 5, le dispositif 1 se diffère du précédent mode de réalisation en ce qu'il présente un premier tube 8 et une première vis 7 sans fin agencés de manière horizontale dans la cuve 2. Ceux-ci étant toujours disposés au-dessus du deuxième tube 10. Ce dernier est ouvert en partie supérieure (à l'intérieur de la cuve 2) sur toute sa longueur et comprend la deuxième vis 9 sans fin, telle une « vis en auge ». Le filet 22 de la deuxième vis 9 communique avec l'extérieure du tube 10 et de la cuve 2. Les granules d'amidon tombant par gravité se déposent ainsi directement à l'intérieure du tube 10. La « vis en auge » et l'agencement horizontal de la première vis peuvent être prévus de manière indépendante sur le premier mode de réalisation.

Tout ou partie des pièces constituant le dispositif 1 est constitué de matériau en inox, acier inoxydable, présentant une très bonne compatibilité alimentaire.

Le dispositif 1 comprend également un système de filtration d'eau (non représenté) en circuit fermé qui permet de filtrer l'eau chargée en amidon et de la réinjecter propre dans le dispositif 1.

Les premières 7, un deuxième 9 et/ou troisième 30 vis sans fin sont motorisées chacune ou un moteur (non représenté) permet leur entraînement en rotation. Toutefois, les vis peuvent fonctionner manuellement.

L'invention concerne également un procédé d'extraction d'amidon au moyen d'un dispositif d'extraction d'amidon tel que décrit ci-dessus. Ledit procédé comprend les étapes suivantes :
- approvisionnement du dispositif 1 de matières premières 6 comprenant de l'amidon et sous forme de pulpe via l'entrée 5 ;
- un premier convoiement dans lequel la matière première 6 est convoyée par la première vis 7 sans fin le long du premier tube 8;
- une étape de tamisage de ladite pulpe par le frottement de la première vis 7 sans fin sur le tamis 12 pour obtenir des granules d'amidon, lesquels tombent par gravité au fond de la cuve 2 ;
- un deuxième convoiement dans lequel les granules d'amidon sont convoyés et extraits de la cuve 2.

Selon une autre mise en oeuvre dudit procédé, on prévoit une autre étape consistant en un convoiement d'approvisionnement de la matière première par la troisième vis 30 sans fin dans le troisième tube 19 communiquant avec l'entrée 5.

Un troisième convoiement est également prévu pour convoyer et acheminer les granules d'amidon vers un éventuel autre dispositif de traitement.

On obtient au moyen de ce procédé et de ce dispositif 1, une extraction en continu et un amidon pur à environ 98%.

Un dispositif de ce genre peut être utilisé pour l'extraction ou la séparation de minerai ou de roche ou sable. Le diamètre des mailles du tamis pour les roches, sables ou minerais peuvent être compris entre 100 µm et 2 cm.

De même, on comprend bien que dans un processus d'industrialisation que le dispositif comporte plusieurs vis sans fin disposées au-dessus d'une pluralité de vis sans fin dans la cuve selon le même agencement des différents modes de réalisation présentés.

Selon un autre aspect, l'invention fournit des granulés solides pour alimentation animale susceptibles d'être obtenus par le procédé selon l'invention dans l'une quelconque de ses variantes.

### Exemples

D'autres avantages pourront ancore apparaître à l'homme du métier à la lecture des exemples ci-dessous illustrés par les figures annexées, données à titre illustratif.

### Exemple 1:

Du conflore cultivé sur l'île de la Réunion a été récolté mécaniquement puis lavé dans une cuve contenant de l'eau pour donner 800 kilogrammes (kg) de conflore entier composé de rhizomes seuls et de feuilles seules. Les fibres de conflore ont ensuite été réduites à une dimension comprise entre 1 à 3 millimètres par broyage déchiquetage à l'aide d'une machine broyeuse déchiqueteuse de marque Lessines® (marque de commerce) à une vitesse de 50 km.h⁻¹. Le broyat obtenu a ensuite été mélangé à 200 kg de soja sec, à 100 kg d'oligoéléments et à 30 kg de NaCl lors de l'étape de malaxage. Le soja sec, les oligoéléments et le NaCl provenant de l'Usine de Prémix (CCPA). Le mélange ainsi obtenu a alors été pressé par une presse de marque EARL Desquelle (marque déposée) à une vitesse de 2,5 km.h⁻¹, séché à air sec à une température au plus de 45°C grâce à une machine de marque Dessica® (marque de commerce) puis malaxé par rotation à une vitesse de 2,5 km.h⁻¹. Les granulés de forme cylindrique ont enfin été formés par extrusion à l'aide d'une presse de marque EARL Desquelle (marque déposée) pour former des granulés.

Ainsi, les composés entrant dans la composition des granulés selon l'exemple 1 ont été ajoutés dans les proportions:
▪ 70% de broyat de feuilles conflore et de rhizomes de conflore,
▪ 18% de soja sec,
▪ 9% de oligoéléments et,
▪ 3% de NaCl,
les pourcentages représentent un pourcentages en poids du poids total de la composition.

Des granulés ayant une valeur énergétique d'environ 1400 kilocalories, sans les intrants, pour 100 grammes de granulés ont alors été obtenus.

### Exemple 2:

Le broyat de conflore a été obtenu selon l'exemple 1. Le broyat obtenu a ensuite été pressé, séché puis malaxé par rotation. Les granulés ont enfin été formés par extrusion à l'aide d'une presse de marque EARL Desquelle (marque déposée) pour former des granulés.

Ainsi, des granulés selon l'exemple 2 sont composés de 100% de feuilles et de rhizomes de conflore en poids total de la composition.

### Exemple 3:

Les granulés ont été fabriqués selon l'exemple 2, dans lequel les 800 kilogrammes (kg) de conflores ont été composés uniquement de rhizomes de conflore.

Ainsi, les granulés obtenus selon l'exemple 2 ont été composés de 100% de feuilles et de rhizomes de conflore en poids total de la composition.

### Exemple 4:

Les granulés ont été fabriqués selon l'exemple 2, dans lequel les 800 kilogrammes (kg) de conflores ont uniquement été composés de feuilles de conflore. Ainsi, les granulés obtenus selon l'exemple 3 ont été composés de 100% de feuilles de conflore en poids total de la composition.

### Exemple 5: Formulation bovine

800 kilogrammes (kg) de conflore entier composé de rhizomes et de feuilles cultivés sur l'île de la Réunion ont été récoltés mécaniquement puis lavés dans une cuve contenant de l'eau. Les fibres de conflore ont ensuite été réduites à une dimension comprise entre 1 à 3 millimètres par broyage déchiquetage à l'aide d'une machine broyeuse déchiqueteuse de marque Lessines (marque déposée) à une vitesse de 50 km.h⁻¹ et 100 km.h⁻¹.

Le broyat obtenu a ensuite été mélangé à 200 kg de soja sec, à 100 kg de maïs sec, à 100 kg d'oligoéléments et à 30 kg de NaCl lors de l'étape de malaxage. Le soja sec, le maïs sec, les oligoéléments et le NaCl provenant de l'Usine de Prémix (CCPA).

Le mélange ainsi obtenu a alors été pressé par une presse de marque EARL Desquelle (marque déposée) à une vitesse de 2,5 km.h⁻¹, séché à air sec à une température au plus de 45°C grâce à une machine de marque Dessica® (marque de commerce) puis malaxé par rotation à une vitesse de 2,5 km.h⁻¹.

Les granulés ont enfin été formés par extrusion à l'aide d'une presse de marque EARL Desquelle (marque déposée) pour former des granulés de forme cylindrique.

La composition finale obtenue a été analysée et comprend :
▪ Mais 29,7%
▪ Tourteau de soja 27,0%
▪ Drêches d'amidonnerie Canna 40,0%
▪ Carbonate de chaux 1,3 %
▪ Phosphate.bicalcique bihydrate 1,3 %
▪ Sel 0,3 %
▪ Prémixe oligoéléments 0,5 %
les pourcentages représentent un pourcentages en poids du poids total de la composition.

### Exemple 5: Formulation porcine

500 kilogrammes (kg) de conflore entier composé de rhizomes et de feuilles cultivés sur l'île de la Réunion ont été récoltés mécaniquement puis lavés dans une cuve contenant de l'eau. Les fibres de conflore ont ensuite été réduites à une dimension comprise entre 1 à 3 millimètres par broyage déchiquetage à l'aide d'une machine broyeuse déchiqueteuse de marque Lessines (marque déposée) à une vitesse de 50 km.h⁻¹.

Le broyat obtenu a ensuite été mélangé à 300 kg de soja sec, à 100 kg de maïs sec, à 100 kg d'oligoéléments et à 30 kg de NaCl lors de l'étape de malaxage. Le soja sec, le maïs sec, les oligoéléments et le NaCl provenant de l'Usine de Prémix (CCPA).

Le mélange ainsi obtenu a alors été pressé par une presse de marque EARL Desquelle® (marque de commerce) à une vitesse de 2,5 km.h⁻¹, séché à air sec à une température au plus de 45°C grâce à une machine de marque Dessica (marque déposée) puis malaxé par rotation à une vitesse de 2,5 km.h⁻¹.

Les granulés ont enfin été formés par extrusion à l'aide d'une presse de marque EARL Desquelle (marque déposée) pour former des granulés de forme cylindrique.

La composition finale obtenue a été analysée et comprend :
▪ Mais 59,1%
▪ Tourteau de soja 22,7%
▪ Drêches d'amidonnerie Canna % 16,2
▪ Lysine 98 HCl pure 0.2 %
▪ Carbonate de chaux 0.1%
▪ Phosphate bicalcique bihydrate 0,9 %
▪ Sel 0,4 %
▪ Prémixe oligoéléments 0,5%
les pourcentages représentent un pourcentages en poids du poids total de la composition.

### Exemple 6: Formulation pour poulets :

400 kilogrammes (kg) de conflore entier composé de rhizomes et de feuilles cultivés sur l'île de la Réunion ont été récoltés mécaniquement puis lavés dans une cuve contenant de l'eau. Les fibres de conflore ont ensuite été réduites à une dimension comprise entre 1 à 3 millimètres par broyage déchiquetage à l'aide d'une machine broyeuse déchiqueteuse de marque Lessines (marque déposée) à une vitesse de 50 km.h⁻¹.

Le broyat obtenu a ensuite été mélangé à 400 kg de soja sec, à 100 kg de maïs sec, à 100 kg d'oligoéléments et à 30 kg de NaCl lors de l'étape de malaxage. Le soja sec, le maïs sec, les oligoéléments et le NaCl provenant de l'Usine de Prémix (CCPA).

Le mélange ainsi obtenu a alors été pressé par une presse de marque EARL Desquelle (marque déposée) de 2,5 km.h⁻¹, séché à air sec à une température au plus de 45°C grâce à une machine de marque Dessica (marque déposée) puis malaxé par rotation à une vitesse de 2,5 km.h⁻¹.

Les granulés ont enfin été formés par extrusion à l'aide d'une presse de marque EARL Desquelle (marque déposée) pour former des granulés de forme cylindrique.

La composition finale obtenue a été analysée et comprend :
▪ Mais 65,2%
▪ Tourteau de soja 25,5%
▪ Drêches d'amidonnerie canna 6,2%
▪ Lysine 98 HCl pure 0,2%
▪ Methionine pure 0,3%
▪ Carbonate de chaux 0,2%
▪ Phosphate bicalcique bihydrate 1,7%
▪ Sel 0,4%
▪ Prémixe oligoélément 0,5%
les pourcentages représentent un pourcentages en poids du poids total de la composition.

### Listes des references

1. D. Laborde and S. Msangi "Biofuels, Environment, and Food: The Story Gets More Complicated," in 2011 Global Food Policy Report, (Washington, DC: International Food Policy Research Institute, 2012), www.ifpri.org/gfpr/2011.
2. M. W. Rosegrant, "Biofuels and Grain Prices: Impacts and Policy Responses," Testimony for the US Senate Committee on Homeland Security andGovernmental Affairs, May 7, 2008 (Washington, DC: IFPRI), www.ifpri.org/publication/biofuels-and-grain-prices.
3. M. W. Rosegrant, T. Zhu, S. Msangi, and T. Sulser, "Global Scenarios for Biofuels: Impacts and Implications," Review of Agricultural Economics 30, no. 3 (2008): 495-505, http://dx.doi. org/10.1111/j.1467-9353.2008.00424.x.

## Revendications

1. Composition alimentaire sous forme de granulés solides pour alimentation animale comprenant :
- 50 à 100% en poids de broyat de conflore (*canna indica*) par rapport au poids totale de ladite composition,
- éventuellement un broyat d'une autre plante utilisée dans l'alimentation humaine ou animale, et
- éventuellement au moins un complément alimentaire.

2. Composition selon la revendication 1 dans laquelle le broyat de conflore est un broyat de feuilles de conflore et/ou un broyat de rhizomes de conflore.

3. Composition selon la revendication 1 ou 2, dans laquelle ledit complément alimentaire est composé d'au moins un des composés choisi dans le groupe comprenant un agent salant ou un prémixe qui est composé d'au moins un composé choisi dans le groupe comprenant des vitamines, des minéraux, des oligo-éléments, des protéines, des produits médicamenteux, du piquant rouge, du piquant blanc, du trèfle fourragé, de la patate douce, du manioc, du pois, de la cacahuète, de la songe, de la canne fourragère, du fruit à pains ou d'un mélange de ceux-ci.

4. Composition selon l'une quelconque des revendications 1 à 3, dans laquelle ladite autre plante utilisée est choisie dans le groupe comprenant le maïs, le soja, la luzerne ou un mélange de ceux-ci.

5. Composition selon l'une quelconque des revendications 1 à 4 comprenant :
- entre 65% et 75% de feuilles conflore ou de rhizomes de conflore,
- entre 13% et 20% de soja,
- entre 5% et 20% de prémixe et,
- entre 3% et 8% de NaCl,
les pourcentages représentent un pourcentage en poids du poids total de la composition.

6. Procédé de préparation de granulés solides pour alimentation animale selon l'une quelconque des revendications 1 à 5 comprenant les étapes :
a) de récolte de rhizomes et/ou des feuilles de conflore,
b) de lavage du produit obtenu à l'étape a),
c) de broyage du produit obtenu à l'étape b),
d) de presse du produit obtenu à l'étape c),
e) de séchage du produit obtenu à l'étape d),
f) de tamisage du produit obtenu à l'étape e),
g) de malaxage du produit obtenu à l'étape f),
h) et d'extrusion du produit obtenu à l'étape g) pour former des granulés.

7. Procédé selon la revendication 6 dans lequel l'ajout du ou des complément(s) alimentaire(s) est effectué pendant l'étape de malaxage g) et/ou pendant l'étape de presse d) et/ou précède l'étape de presse d).

8. Procédé de préparation de granulés solides selon la revendication 6 ou 7 dans lequel les fibres de feuilles de conflore et/ou les fibres de rhizomes de conflore sont amenées à une dimension comprise entre 1 à 3 mm par broyage.

9. Procédé de préparation de granulés solides selon l'une quelconque des revendications 6 à 8 dans lequel l'étape de broyage est réalisée selon une technique de broyage déchiquetage.

10. Procédé selon la revendication 6 dans lequel l'eau issue de l'étape de presse d) est récupérée pour une utilisation agricole ou une consommation humaine ou animale.

11. Procédé selon l'une quelconque des revendications 6 à 10 dans lequel l'étape de presse est précédée d'une étape d'extraction d'amidon.

12. Procédé selon l'une quelconque des revendications 6 à 11 dans lequel l'extraction d'amidon se fait à l'aide d'un dispositif pour extraction mécanique d'amidon issu de matières premières végétales, ledit dispositif comprenant :
- au moins une cuve (2) munie d'un fond (3) et de parois (4) latérales;
- une entrée (5) pour l'approvisionnement des matières premières (6) sous forme de pulpe;
- au moins une première (7) et une deuxième vis (9) sans fin ayant une fonction de convoiement installées respectivement dans un premier (8) et deuxième tube (10), ces derniers étant fixés dans la cuve (2) ;
- au moins une sortie (11) des matières premières (6) transformées ; et,
- un tamis (12) pour tamiser la pulpe,
- **caractérisé en ce que** l'entrée (5) et une première sortie (18) des matières premières (6) transformées communiquent chacune avec une extrémité (15, 15') dudit premier tube (8), et **en ce que** la première vis (7) sans fin présente un diamètre externe (de) sensiblement égal à celui du premier tube (8).

## Patentansprüche

1. Nahrungsmittelzusammensetzung in Form von festem Granulat zur tierischen Ernährung, umfassend:
- 50 bis 100 Gew.-% Häckselgut von Indischem Blumenrohr (*canna indica*) mit Bezug auf das Gesamtgewicht der Zusammensetzung,
- eventuell ein Häckselgut einer anderen Pflanze, die bei der menschlichen oder tierischen Ernährung verwendet wird, und
eventuell mindestens ein Nahrungsmittelzusatz.

2. Zusammensetzung nach Anspruch 1, wobei das Häckselgut von Indischem Blumenrohr ein Häckselgut aus Blättern von Indischem Blumenrohr und/oder ein Häckselgut von Rhizomen von Indischem Blumenrohr ist.

3. Zusammensetzung nach Anspruch 1 oder 2, wobei der Nahrungsmittelzusatz aus mindestens einer der Verbindungen zusammengesetzt ist, ausgewählt aus der Gruppe, umfassend ein Salzmittel oder eine Vormischung, die aus mindestens einer Verbindung zusammengesetzt ist, ausgewählt aus der Gruppe umfassend Vitamine, Mineralien, Oligoelemente, Proteine, Arzneimittelprodukte, red Biden pilosa ("piquant rouge"), Biden pilosa alba("piquant blanc"), Futterklee, süße Kartoffel, Maniok, Erbse, Erdnuss, Taro, Futterrohr, Brotfrucht oder eine Mischung derselben.

4. Zusammensetzung nach einem der Ansprüche 1 bis 3, wobei die andere verwendete Pflanze ausgewählt ist aus der Gruppe, umfassend Mais, Soja, Luzerne oder eine Mischung derselben.

5. Zusammensetzung nach einem der Ansprüche 1 bis 4, umfassend:
- zwischen 65 % und 75 % Indische Blumenrohrblätter oder Rhizome von Indischem Blumenrohr,
- zwischen 13 % und 20 % Soja,
- zwischen 5 % und 20 % Vormischung und,
- zwischen 3 % und 8 % NaCl,
wobei die Prozentsätze einen Gewichtsprozentsatz des Gesamtgewichts der Zusammensetzung darstellen.

6. Verfahren zur Herstellung von festem Granulat zur tierischen Ernährung nach einem der Ansprüche 1 bis 5, umfassend die folgenden Schritte:
a) Ernten von Rhizomen und/oder Blättern von Indischem Blumenrohr,
b) Waschen des in Schritt a) erhaltenen Produkts,
c) Häckseln des in Schritt b) erhaltenen Produkts,
d) Pressen des in Schritt c) erhaltenen Produkts,
e) Trocknen des in Schritt d) erhaltenen Produkts,
f) Sieben des in Schritt e) erhaltenen Produkts,
g) Kneten des in Schritt f) erhaltenen Produkts,
h) und Extrudieren des in Schritt g) erhaltenen Produkts, um Granulat zu bilden.

7. Verfahren nach Anspruch 6, wobei die Zugabe des Nahrungsmittelzusatzes oder der Nahrungsmittelzusätze während des Schritts des Knetens g) und/oder während des Schritts des Pressens d) durchgeführt wird und/oder dem Schritt des Pressens d) vorausgeht.

8. Verfahren zur Herstellung von festem Granulat nach Anspruch 6 oder 7, wobei die Fasern von Blättern von Indischem Blumenrohr und/oder die Fasern von Rhizomen von Indischem Blumenrohr auf eine Abmessung gebracht werden, die zwischen 1 und 3 mm pro Häckselvorgang liegt.

9. Verfahren zur Herstellung von festem Granulat nach einem der Ansprüche 6 bis 8, wobei der Schritt des Häckselns gemäß einer Zerreiß-Häckseltechnik durchgeführt wird.

10. Verfahren nach Anspruch 6, wobei das Wasser, das aus dem Schritt des Pressens d) stammt, für eine landwirtschaftliche Verwendung oder einen menschlichen oder tierischen Verbrauch wiedergewonnen wird.

11. Verfahren nach einem der Ansprüche 6 bis 10, wobei dem Schritt des Pressens ein Schritt des Extrahierens von Stärke vorausgeht.

12. Verfahren nach einem der Ansprüche 6 bis 11, wobei die Extraktion von Stärke mit Hilfe einer Vorrichtung zur mechanischen Extraktion von Stärke erfolgt, die aus pflanzlichen Rohstoffen stammt, wobei die Vorrichtung Folgendes umfasst:
- mindestens eine Wanne (2), die mit einem Boden (3) und seitlichen Wänden (4) ausgestattet ist;
- einen Eingang (5) zur Bereitstellung der Rohstoffe (6) in Form von Pulpe;
- mindestens eine erste (7) und eine zweite Endlosschraube (9) mit einer Begleitfunktion, die jeweils in einem ersten (8) und einem zweiten Rohr (10) installiert sind, wobei diese Letzteren in der Wanne (2) fixiert sind;
- mindestens einen Ausgang (11) der umgewandelten Rohstoffe (6); und
- ein Sieb (12), um die Pulpe zu sieben,
- **dadurch gekennzeichnet, dass** der Eingang (5) und ein erster Ausgang (18) der umgewandelten Rohstoffe (6) jeweils mit einem Ende (15, 15') des ersten Rohrs (8) kommunizieren, und dadurch, dass die erste Endlosschraube (7) einen Außendurchmesser (dₑ) aufweist, der im Wesentlichen gleich demjenigen des ersten Rohrs (8) ist.

## Claims

1. Food composition in the form of solid pellets for animal food including:
- 50 to 100% by weight of ground Indian shot (*canna indica*) relative to the total weight of said composition,
- possibly a ground material of another plant used in human or animal food, and
- possibly at least one other food complement.

2. Composition according to claim 1 in which the ground Indian shot consists of ground Indian shot leaves and/or ground Indian shot rhizomes.

3. Composition according to claim 1 or 2, in which said food complement is composed of at least one of the compounds chosen from the group comprising a salting agent or a premix that is composed of at least one compound chosen from among the group including vitamins, minerals, trace elements, proteins, medicine products, red Biden pilosa ("piquant rouge"), Biden pilosa alba ("piquant blanc"), clover forage, sweet potato, cassava, peas, peanuts, taro, cane forage, breadfruit or a mix of these.

4. Composition according to any one of claims 1 to 3, in which said other plant used is chosen from the group comprising maize, soya, alfalfa or a mix of these.

5. Composition according to any one of claims 1 to 4 comprising:
- between 65% and 75% of Indian shot leaves or Indian shot rhizomes,
- between 13% and 20% of soya,
- between 5% and 20% of premix and,
- between 3% and 8% of NaCl,
The percentages represent a percent by weight of the total weight of the composition.

6. Method for preparing solid pellets for animal feed according to any one of claims 1 to 5 including the following steps:
a) collect Indian shot rhizomes and/or leaves,
b) wash the product obtained in step a),
c) grind the product obtained in step b),
d) press the product obtained in step c),
e) dry the product obtained in step d),
f) sieve the product obtained in step e),
g) mix the product obtained in step f),
h) and extrude the product obtained in step g) to form pellets.

7. Method according to claim 6 in which the food complement(s) is (are) added during the mixing step g) and/or during the pressing step d) and/or preceding the pressing step d).

8. Method for preparing solid pellets according to claim 6 or 7 in which fibres of Indian Shot leaves and/or fibres of Indian Shot rhizomes are ground to a dimension of between 1 and 3 mm.

9. Method for preparing solid pellets according to any one of claims 6 to 8 in which the grinding step is done using a grinding / chopping technique.

10. Method according to claim 6 in which water obtained during the pressing step d) is recovered for farm use or for human or animal consumption.

11. Method according to any one of claims 6 to 10 in which the pressing step is preceded by a starch extraction step.

12. Method according to any one of claims 6 to 11 in which starch is extracted using a device for mechanical extraction of starch originating from plant raw materials, said device comprising
- at least one vat (2) provided with a bottom (3) and side walls (4);
- an inlet (5) for the supply of raw materials (6) in the form of a pulp;
- at least a first wormscrew (7) and a second wormscrew (9) performing a conveying function installed in a first tube (8) and a second tube (10) respectively, the latter being fixed in the vat (2);
- at least one output (11) of transformed raw materials (6); and,
- a sieve (12) to sieve the pulp,
**characterised in that** the inlet (5) and a first outlet (18) of transformed raw materials (6) each communicate with one end (15, 15') of said first tube (8), and **in that** the first wormscrew (7) has an outside diameter (dₑ) approximately equal to that of the first tube (8).
